# EUROPEAN PATENT APPLICATION

(11) **EP 4 516 085 A1**
(43) Date of publication of application: **05.03.2025**
(21) Application number: 24197224.9
(22) Date of filing: 29.08.2024
(51) Int. Cl.: A01D 34/416, A01D 34/90, A01D 75/20

(54) **ADJUSTABLE GUARD ASSEMBLY FOR A TRIMMER TOOL**

(30) Priority: 30.08.2023 US 202363535489 P
(71) Applicant: Techtronic Cordless GP, Anderson, SC 29621 (US)
(72) Inventor: LOUNSBURY, Colin, Anderson, 29621 (US); SCHMIDT, Andrew, Anderson, 29621 (US); LAI, Martin, Anderson, 29621 (US)
(74) Representative: Novagraaf Group

(57) **Abstract**

The present invention relates to a guard assembly (200) for a trimmer tool (100) including a tool head, the guard assembly including a mount body (220) forming a slot (222) extending along a radial direction and including an attachment member (226), a guard body (210) forming a perimeter configured to partially surround the tool head, the guard body forming a first opening (212) configured to align with the slot at the mount body, the guard body forming a second opening (214) from which a track (215) extends along the radial direction, wherein the attachment member is extendable into the second opening and into the track, the attachment member configured to slide within the track at the guard body, and a handle assembly (240) extendable through the slot at the mount body and the first opening at the guard body to selectively affix the mount body to the guard body.

## Description

### PRIORITY STATEMENT

The present application claims the benefit of priority to US provisional patent application serial number 63/535,489, filed August 30, 2023, the disclosure of which is incorporated by reference herein in its entirety.

### FIELD

The present disclosure generally pertains to power tools, and more particularly to trimmer tools, and guards therefor.

### BACKGROUND

Power tools such as trimmers for lawn and garden include rotary cutting heads, such as for trimming grass. Improved trimmers, trimmer guards, and components therefor would be advantageous and beneficial.

### BRIEF DESCRIPTION

Aspects and advantages of the invention will be set forth in part in the following description, may be apparent from the description, or may be learned through practice of the invention.

An aspect of the present disclosure is directed to a guard assembly for a trimmer tool including a tool head, the guard assembly including a mount body forming a slot extending along a radial direction and including an attachment member; a guard body forming a perimeter configured to partially surround the tool head, the guard body forming a first opening configured to align with the slot at the mount body, the guard body forming a second opening from which a track extends along the radial direction, wherein the attachment member is extendable into the second opening and into the track, the attachment member of the mount body configured to slide within the track at the guard body; and a handle assembly extendable through the slot at the mount body and the first opening at the guard body to selectively affix the mount body to the guard body.

An aspect of the present disclosure is directed to a trimmer tool, including a shaft; a tool head; a linkage configured to connect the tool head to the shaft; and a guard assembly including a mount body forming a slot extending along a radial direction extending from the tool head, the mount body including an attachment member, the mount body including a channel configured to receive the shaft and the linkage; a guard body forming a perimeter configured to partially surround the tool head, the guard body forming a first opening configured to align with the slot at the mount body, the guard body forming a second opening from which a track extends along the radial direction, wherein the attachment member is extendable into the second opening and into the track, the attachment member of the mount body configured to slide within the track at the guard body; and a handle assembly extendable through the slot at the mount body and the first opening at the guard body to selectively affix the mount body to the guard body.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 provides a perspective view of an exemplary embodiment of a power tool including an embodiment of a guard assembly in accordance with aspects of the present disclosure;
Fig. 2 provides a perspective view of an exemplary embodiment of a power tool including an embodiment of the guard assembly in accordance with aspects of the present disclosure;
Fig. 3 provides a perspective view of an exemplary embodiment of a power tool including an embodiment of the guard assembly in accordance with aspects of the present disclosure;
Fig. 4 provides a cutaway perspective view of an exemplary embodiment of a power tool including an embodiment of the guard assembly in accordance with aspects of the present disclosure;
Fig. 5 provides a cutaway view of an exemplary embodiment of the guard assembly in accordance with aspects of the present disclosure;
Fig. 6 provides a perspective view of an exemplary embodiment of a mount body of the guard assembly in accordance with aspects of the present disclosure;
Fig. 7 provides a bottom-up perspective view of an exemplary embodiment of the mount body of the guard assembly in accordance with aspects of the present disclosure;
Fig. 8 provides a perspective view of an exemplary embodiment of a power tool including an embodiment of the guard assembly, with mount body removed for clarity, in accordance with aspects of the present disclosure;
Fig. 9 provides a perspective view of an exemplary embodiment of a guard body of the guard assembly in accordance with aspects of the present disclosure;
Fig. 10 provides a perspective view of an exemplary embodiment of a power tool including an embodiment of the guard assembly, with guard body removed for clarity, in accordance with aspects of the present disclosure;
Fig. 11 provides a perspective view of an exemplary embodiment of a base of the guard assembly in accordance with aspects of the present disclosure;
Fig. 12A provides a bottom-up view of an exemplary embodiment of the guard assembly in accordance with aspects of the present disclosure;
Fig. 12B provides a bottom-up view of an exemplary embodiment of the guard assembly in accordance with aspects of the present disclosure;
Fig. 13 provides a perspective view of an exemplary embodiment of a power tool including an embodiment of the guard assembly in accordance with aspects of the present disclosure;
Fig. 14 provides a first side view of an exemplary embodiment of a power tool including an embodiment of the guard assembly in accordance with aspects of the present disclosure;
Fig. 15 provides a second side view of an exemplary embodiment of a power tool including an embodiment of the guard assembly in accordance with aspects of the present disclosure; and
Fig. 16 provides a cutaway view of an exemplary embodiment of a guard body of the guard assembly in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

The present disclosure is generally directed to improved power tools and safety devices therefor, such as guards for trimmers and trimmer heads. Embodiments of guards, and power tools such as trimmers, depicted and described herein address one or more of the above-identified issues.

The present disclosure is directed generally to improved guards for trimmers and trimmer heads. Adjusting a cutting position gives a user the opportunity to maximize performance (e.g., maximum cut swath) or maximize runtime (minimize cut swath). Embodiments provided herein allow for quick, tool-less adjustment of the cut swath. Embodiments provided herein may provide tool-less adjustment in contrast to requiring removal of screws, bolts, or mechanical fasteners using a tool (e.g., a screwdriver or wrench). Embodiments provided herein may provide tool-less adjustment in contrast to requiring removal of mechanical fasteners securing a line-cutoff blade in place, reversing the blade, and re-tighten the fasteners. Embodiments provided herein may further allow a user to re-position or remove a guard for the power tool, such as to adjust a cutting position or to replace the component.

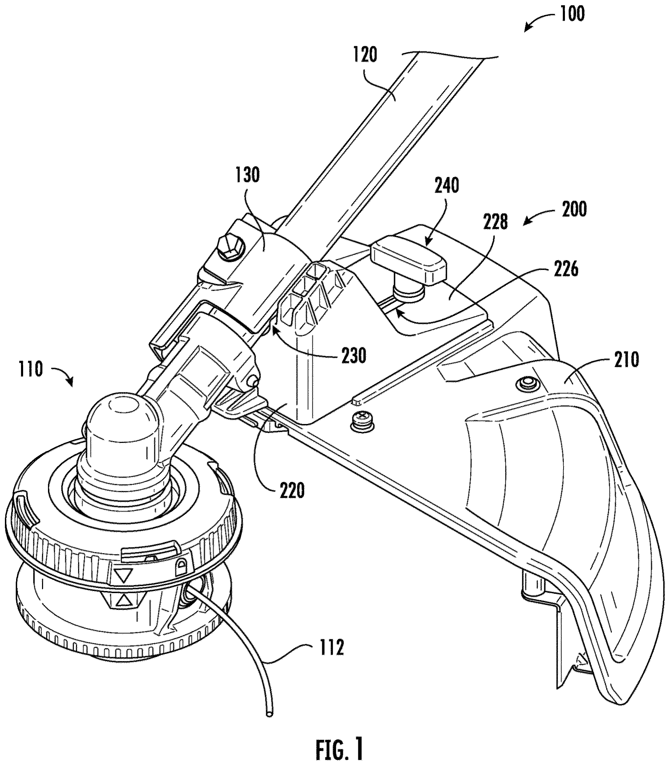

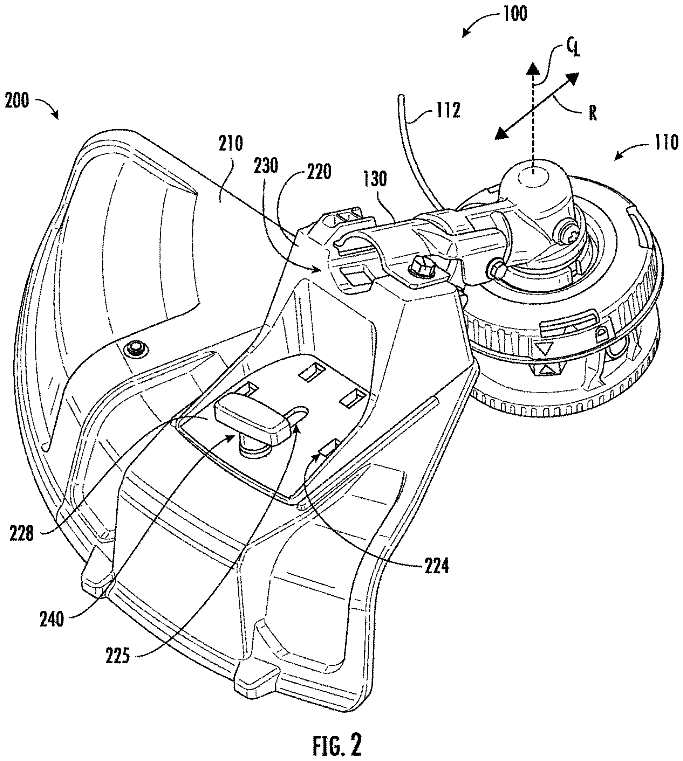

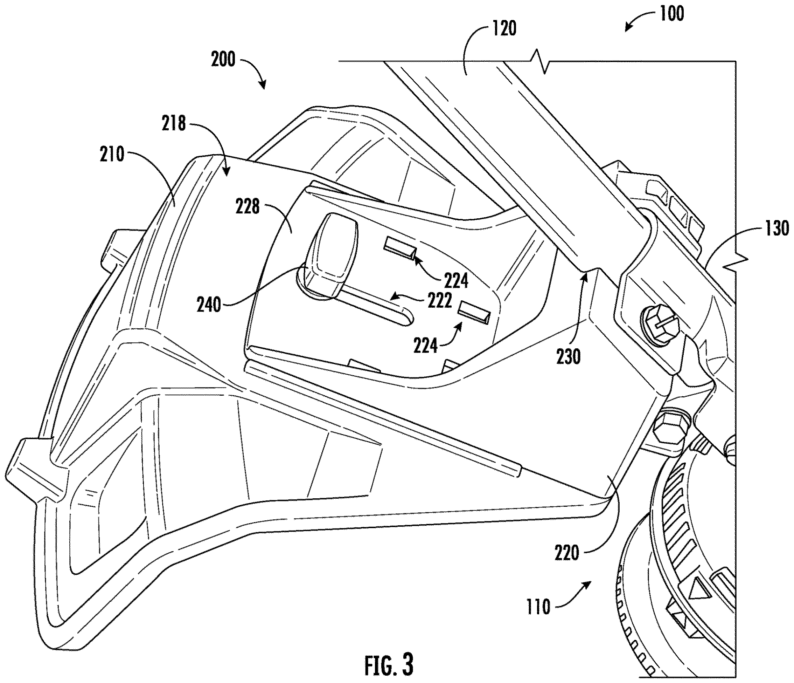

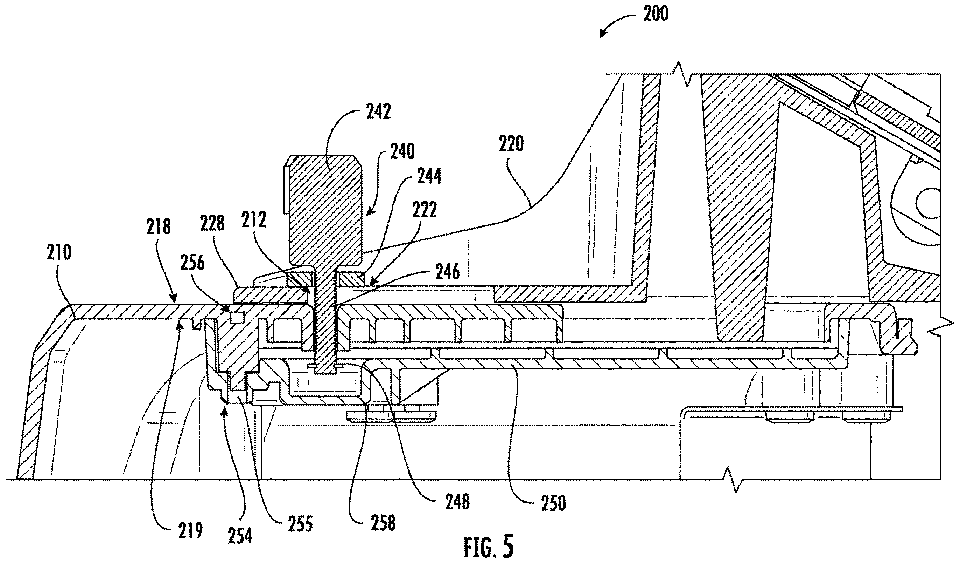

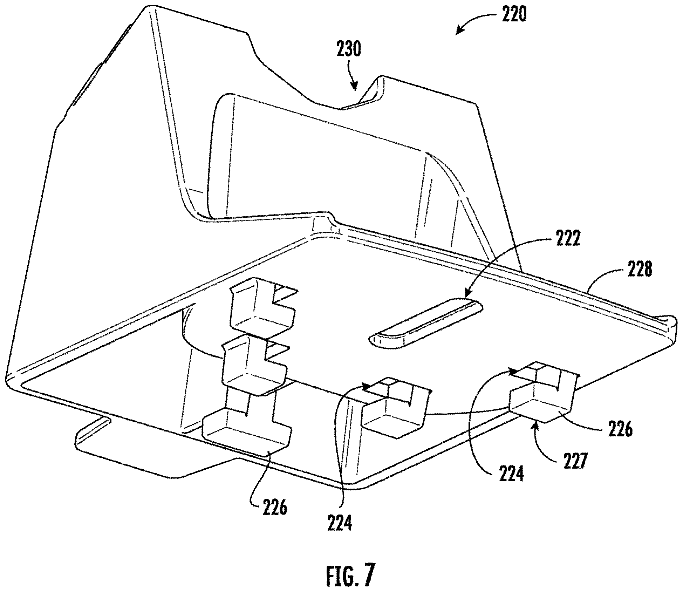

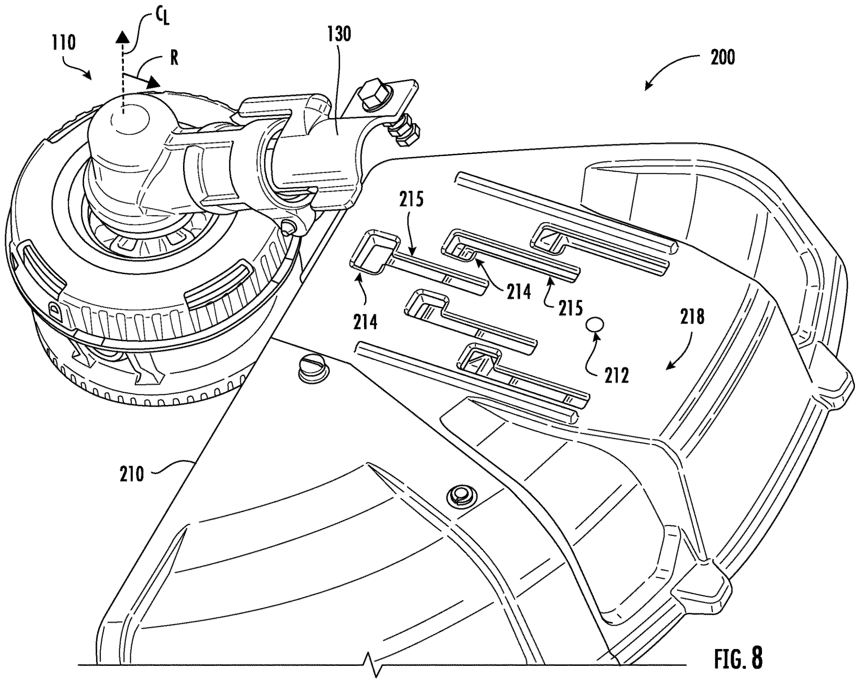

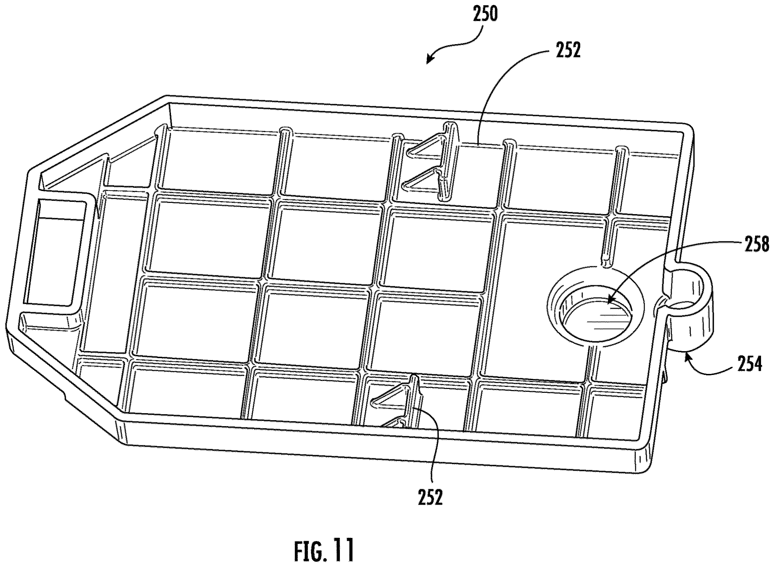

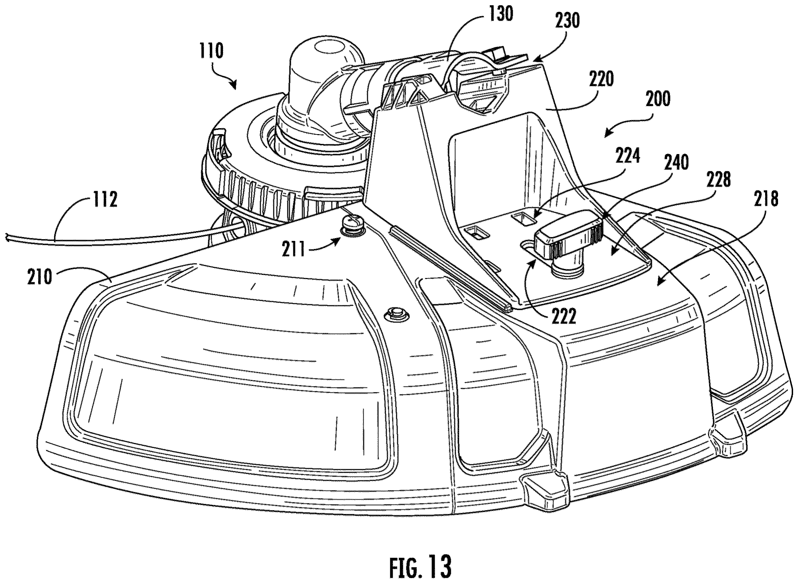

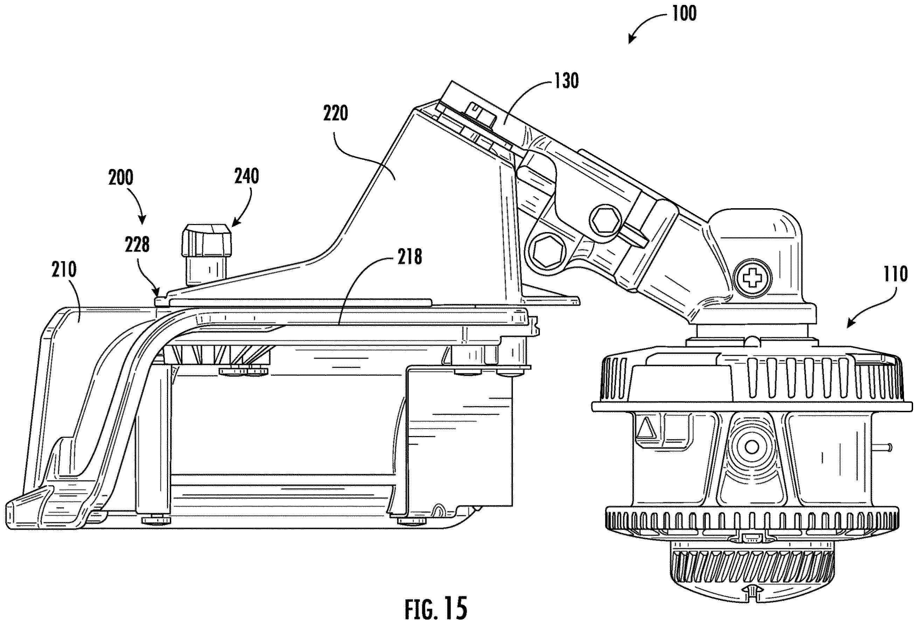

Embodiments of a power tool 100 and guard assembly 200 therefor are provided, such as depicted and described herein. Referring to the drawings, Figs. 1-16 provide exemplary embodiments of the power tool and guard assembly 200. Embodiments of the power tool 100 include a tool head 110 positioned at a first end of a shaft 120. In various embodiments, the tool head 110 forms a trimmer head including a cutting element. In an embodiment, the tool head 110 includes a bump head having a trimmer line wrapped around a spool and configured to dispense from a cartridge. In another embodiment, the tool head 110 includes a pivoting fixed line and bladed head including trimmer line segments secured to pivoting turrets that double back onto each other. In yet another embodiment, the tool head 110 includes flail blades mounted to a pivoting turret. In still various embodiments, the tool head 110 includes a cartridge having a fixed head with a relatively rigid cutting tool, or a flail head including a length of wire or line, such as trimmer line, wrapped around a spool and configured to dispense from the cartridge. It should be appreciated that the power tool 100 may include any type of tool head 110.

A handle and power source (not depicted) may be positioned at a second end of the shaft 120, such as distal to the first end from the tool head 110. The power source may include a battery, an electrical outlet, or liquid and/or gaseous fuel. A motor is configured to receive energy and operate the tool head 110, such as to rotate the cutting tool as generally understood in the art.

The handle can allow an operator to support the weight of the power tool during operation. A grip can be disposed along the shaft to permit a second point of contact for the operator. The grip can include, for example, a portion of the connecting member including a user interface. The user interface can include a trigger that allows the operator to selectively control the power tool, such as to provide or increase output voltage or power to the tool head. The user interface can further include other controls which permit the operator to effect change to the power tool. For instance, by way of non-limiting example, the user interface may include any one or more of a cruise control feature allowing the operator to maintain the operating speed of the trimmer head, a turbo switch or high-low speed toggle which allows the power tool to reach maximum operational speed, a power switch having at least ON and OFF functionality, a safety, or any other desirable user controls. The user interface can include a trimmer line advance interface configured to selectively feed trimmer line from the cartridge when actuated.

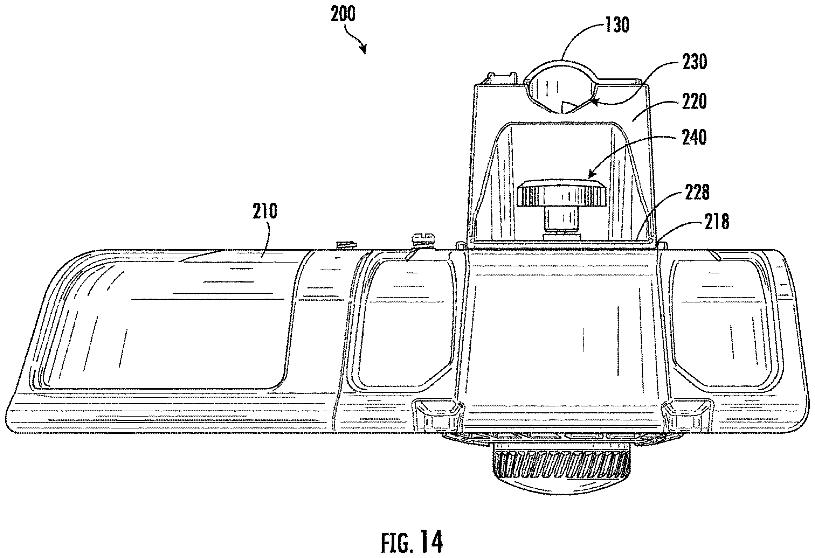

Figs. 1-3 and Fig. 13 provide perspective views of a portion of an exemplary power tool 100 including an embodiment of a guard assembly 200 in accordance with aspects of the present disclosure. Figs. 14-15 further provide side views of an embodiment of the guard assembly 200 and power tool 100. The guard assembly 200 includes a guard body 210 forming a perimeter partially surrounding the tool head 110. The guard body 210 may form an arcuate section relative to a centerline, such as a centerline axis CL extending through the tool head 110. The guard body 210 provides a wall extending outward along a radial direction R relative to the centerline axis CL and along a circumferential direction relative to the centerline axis CL. The guard body 210 extends radially outward from a cutter, such as cutting line 112, extending from the tool head 110.

The power tool 100 includes a linkage 130 connecting the guard assembly 200 to the tool head 110. For instance, the linkage 130 connects a housing of the tool head 110 to a portion of the guard assembly 200. The linkage 130 may be configured to receive the shaft 120, such as to allow user interfaces, power sources, or other operating features at the handle to selectively operate the tool head 110 as generally understood in the art.

The guard assembly 200 includes a mount body 220 connecting the guard body 210 to the shaft 120. The mount body 220 may form a channel 230 at which the shaft 120 may be positioned. For instance, the channel 230 may form at least a portion of a pathway with the linkage 130 at which the shaft 120 is received. However, it should be appreciated that channel 230 may generally form an interface at which linkage 130 may be positioned, at which shaft 120 may be positioned, or both.

The mount body 220 forms a slot 222 forming an opening extending through the mount body 220. For instance, slots such as described herein may include any opening having a major axis and a minor axis, or a length greater than a width, such as a racetrack, oval, rectangle, etc. In various embodiments, the slot 222 extends substantially along the radial direction R. Mount body 220 includes a wall 228 extending co-directional to a corresponding wall 218 at the guard body 210. For instance, walls 218, 228 may each extend co-directional to one another substantially along the radial direction R. In various embodiments, slot 222 is formed through wall 228 and extending along the radial direction R.

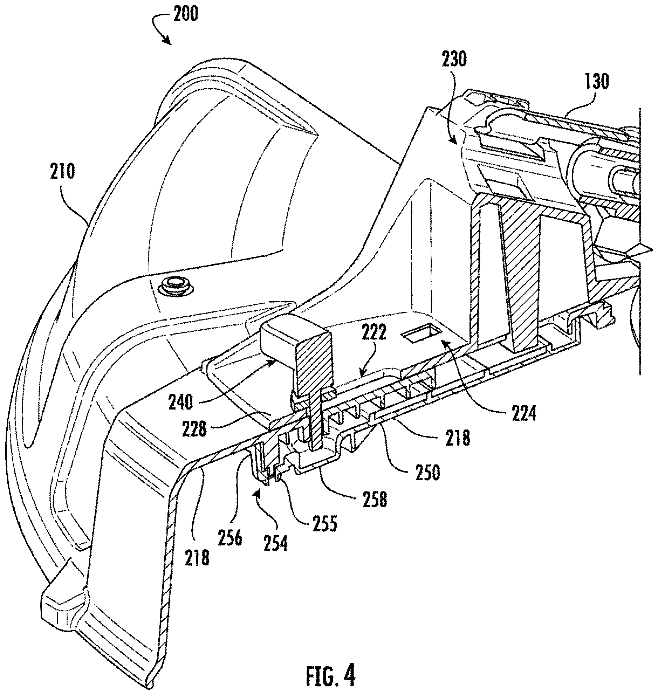

As depicted more clearly in Figs. 4-9, guard body 210 forms an opening 212 configured to correspond in position to the slot 222 at the mount body 220. Opening 212 may form a hole (e.g., a circular opening). Wall 218 may form opening 212 to receive a handle assembly 240. The handle assembly 240 extends through slot 222 and opening 212. Handle assembly 240 is configured to selectively couple the guard body 210 to the mount body 220 at various desired positions relative to the radial direction R.

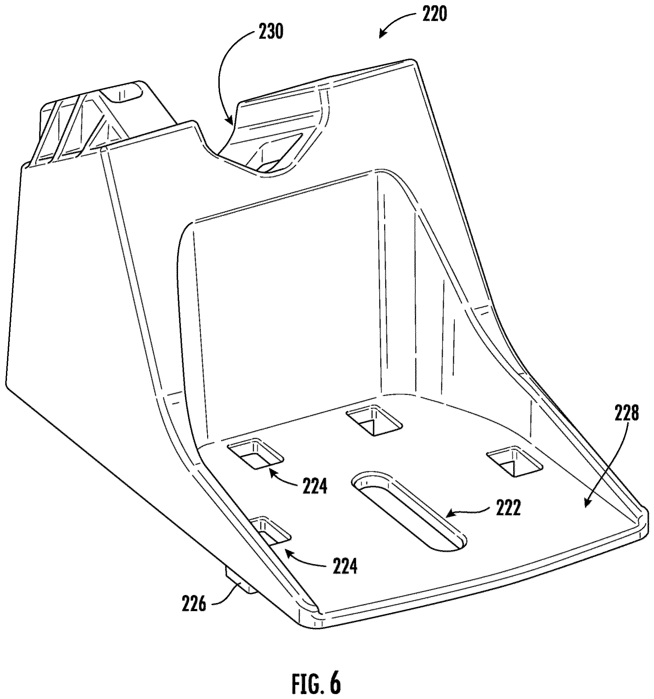

As depicted more clearly in Figs. 6-10, mount body 220 includes a leg, hook, or other attachment member 226 configured to extend into an attachment opening 214 and track 215 formed at the guard body 210. In various embodiments, opening 214 is formed through wall 218 to allow the attachment member 226 to extend through the wall 218. Opening 214 may form a slot through which a detent 227 extends to position through the opening 214. Track 215 extends from opening 214. Attachment member 226 extended into opening 214 is allowed to travel along track 215. Track 215 may include a dimension less than the opening 214, such as to prevent detent 227 from escaping the track 215 except through opening 214.

In various embodiments, mount body 220 may include an opening 224 corresponding to opening 214 and attachment member 226. Opening 224 may allow the operator to see an alignment of openings 214, 224 relative to one another, or an alignment of attachment member 226 to opening 224, such as during positioning of the attachment member 226 through opening 214.

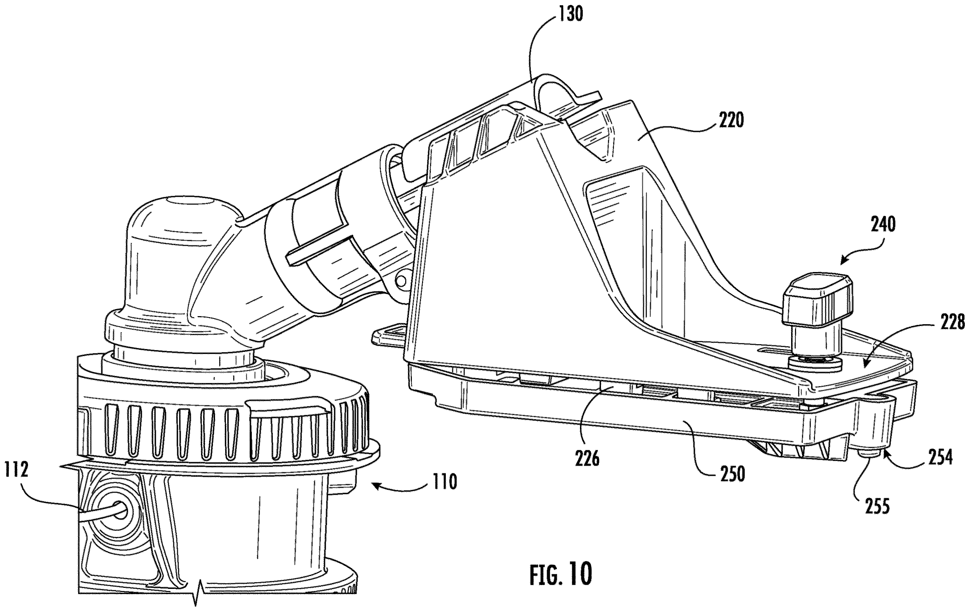

Referring to cross-sectional view in Figs. 4-5, and further depicted in Figs. 10-12, guard assembly 200 may include a base 250 positioned at a bottom face 219 of the wall 218. Base 250 is configured to attach to the wall 218. For instance, base 250 may attach to the bottom face 219 of wall 218 through a fastener interface 254. The fastener interface 254 may include a threaded opening configured to receive a fastener 255 therethrough and into a corresponding fastener interface 256 at the wall 218. Base 250 may include a stop wall 252 positioned to limit movement of the mount body 220 relative to the guard body 210 and base 250. For instance, stop wall 252 may be positioned to limit movement of the detent 227 along the track 215. Limited movement of the detent 227 may include limiting movement along the radial direction R to limit the detent 227 from traveling through the track 215 to the opening 214. For instance, the operator may position the attachment member 226 through the opening 214 and along track 215. The base 250 may be attached to the guard body 210 to position the stop wall 252 between the opening 214 and the track 215, such as to prevent the detent 227 from entering the opening 214 from the track 215 while the base 250 is attached to the guard body 210.

In some embodiments, base 250 may form a protrusion 258 corresponding to a position of the handle assembly 240, such as to allow the handle assembly 240 protrude toward the base 250 without undesired contact at the base 250.

Referring back to cross-sectional views provided in Figs. 4-5, in some embodiments, handle assembly 240 includes a grip or knob 242 attached to a threaded body 246. The threaded body 246 may include a threaded shaft, shank, screw, or other member at which the threaded body 246 may releasably coupled to wall 218 of guard body 210 at opening 212. For instance, opening 212 may form a threaded interface configured to receive the threaded body 246. In some embodiments, a washer 244 may be positioned to form a wall between the knob 242 and wall 228. A lock 248, such as a lock washer, pin, or detent, may be positioned at the threaded body 246 distal to the knob 242. Lock 248 may limit movement of the handle assembly 240 at opening 212, such as to prevent the operator from pulling the threaded body 246 from the opening 212. Lock 248 may provide a surface facilitating clamping of the walls 218, 228 together, such as to limit or prevent movement of the walls 218, 228 relative to one another, such as to hold a radial position at slot 222.

In an exemplary embodiment of operation, the operator extends the handle assembly 240 through slot 222 and opening 212. The operator positions the guard body 210 along the radial direction R by sliding along the slot 222. The operator screws the handle assembly 240 into opening 212 to tighten the guard body 210 and the mount body 220 together, such as to clamp the components together and retain a desired position along the radial direction R. To change the desired position, the operator at least partially unscrews the handle assembly 240 to loosen the coupling of guard body 210 and mount body 220, such as to allow the components to slide radially forward or backward along slot 222 as desired.

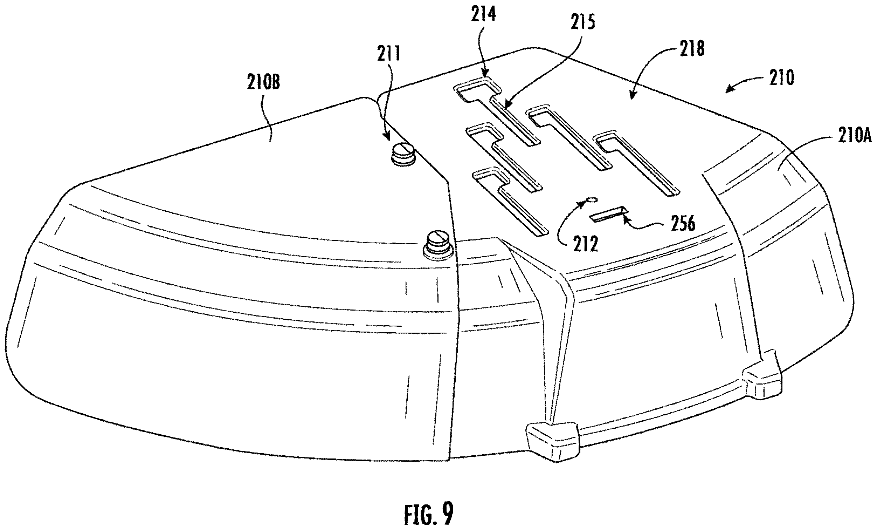

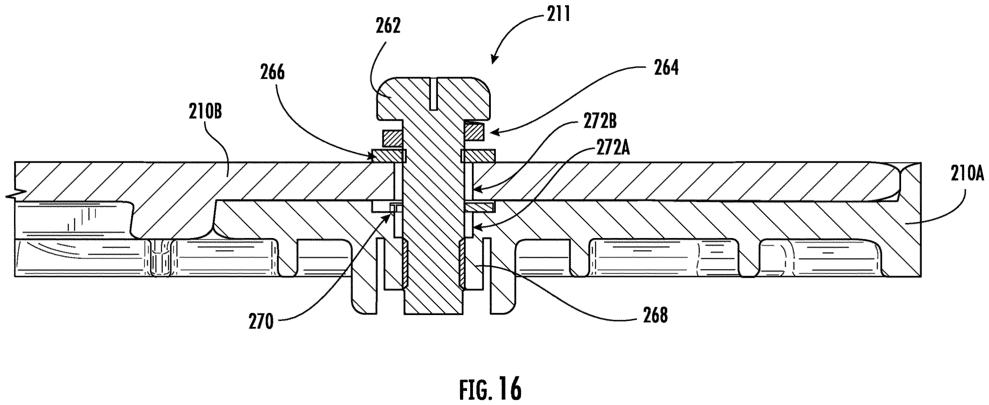

Referring to Figs. 9 and 16, in still various embodiments, guard body 210 may include a first guard body portion 210A separable and releasably coupled to a second guard body portion 210B. A fastener assembly 211 attaches the first and second guard body portions 210A, 210B to one another. Referring to Fig. 16, in some embodiments, the fastener assembly 211 includes a threaded fastener 262 extending through openings 272A, 272B formed respectively at guard body portions 210A, 210B. The fastener assembly 211 may include one or more washers 264, 266 positioned between a head of the threaded fastener 262 and the guard body 210 (e.g., such as guard body portion 210B as depicted). A retaining clip 270 may be positioned on the threaded fastener 262 between the guard body portions 210A, 210B, such as to prevent the threaded fastener 262 from exiting at least one of the guard body portions 210A, 210B (e.g., such as guard body portion 210B as depicted). A retainer 268 may be positioned at the guard body portion 210A, such as to retain and fasten the fastener 262 and attach the guard body portions 210A, 210B together.

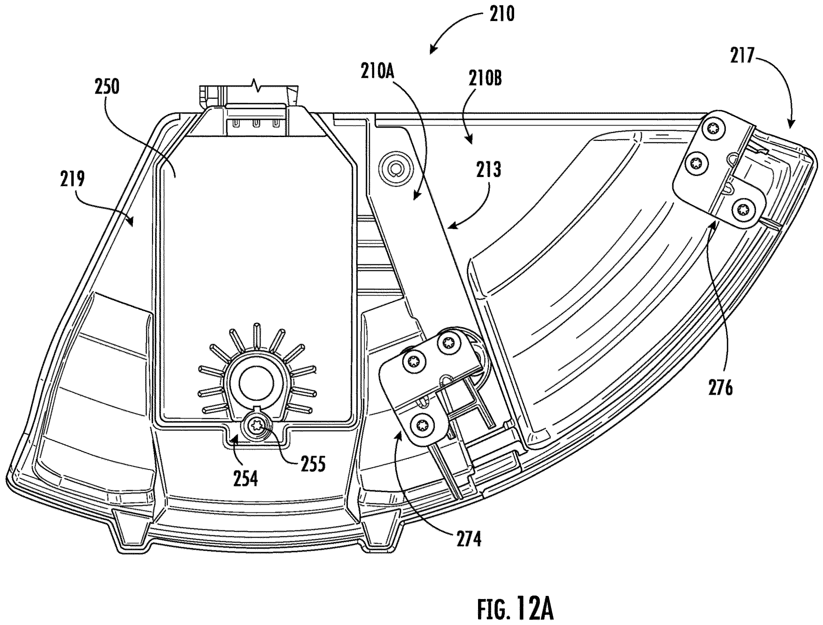

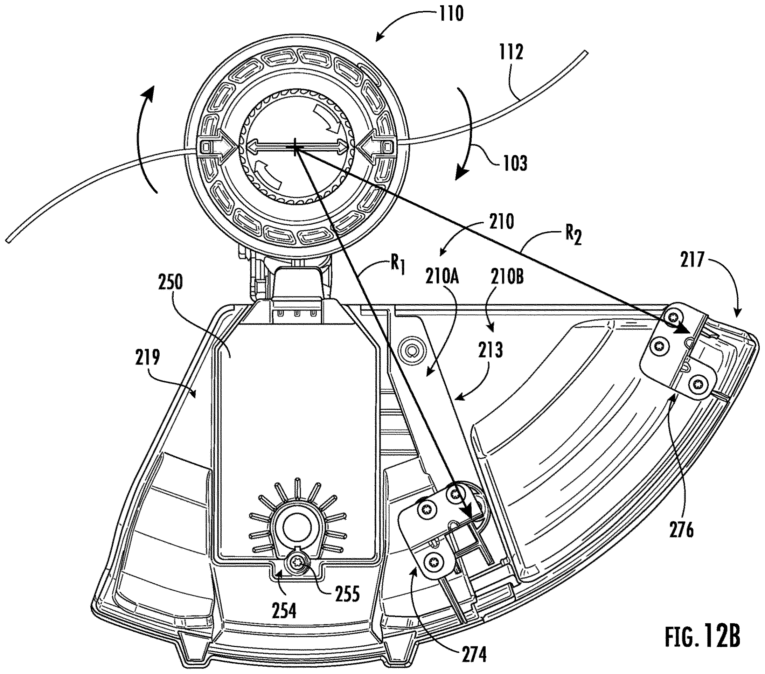

Referring back to the exemplary bottom-up views of Figs. 12A-12B, in various embodiments, guard assembly 200 includes a first line trimmer 274. The first line trimmer 274 may be mounted at the first guard body portion 210A. In some embodiments, the first line trimmer 274 is mounted at or proximate to an interface 213 of the first guard body portion 210A to the second guard body portion 210B.

In still various embodiments, guard assembly 200 includes a second line trimmer 276. The second line trimmer 276 may be mounted at the second guard body portion 210B. In some embodiments, the second line trimmer 276 is positioned at the second guard body portion 210B distal to the first line trimmer 274, such as distal to the interface 213 of the first and second guard body portions 210A, 210B. For instance, the second line trimmer 276 may be positioned at or proximate to corner 217 of second guard body portion 210B distal to interface 213. Corner 217 corresponds to a portion of the second guard portion 210B proximate to cutting line 112 rotating toward the guard assembly 200. As such, second line trimmer 276 is positioned more proximate than first line trimmer 274 to the cutting line 112 rotating toward the guard assembly 200, such as depicted schematically via rotational arrow 103. In still some embodiments, second line trimmer 276 is positioned more radially outward (e.g., radius R₂) relative to tool head 110 than first line trimmer 274 (e.g., radius R₁).

The first line trimmer 274 may include a line-cutoff blade configured to cut the trimmer line 112 from the tool head 110 to a desired working length. The second line trimmer 276 may include a line-cutoff blade configured to cut the trimmer line, such as to prevent trimmer line 112 from damaging the second guard body portion 210B.

In various embodiments, the first line trimmer 274 is configured to cut the trimmer line 112 to the desired length when the second guard body portion 210B is detached from the guard assembly 200. The second line trimmer 276 positioned such as described cuts the trimmer line 112 to a first length longer than a second length cut from the first line trimmer 274. Such positioning may provide an initial cut to the trimmer line 112 at the second line trimmer 276, and a final cut or adjustment to desired length at the first line trimmer 274. The initial cut may protect the guard assembly 200, such as to protect the guard assembly 200 at the second guard body portion 210B. The initial cut of the trimmer line 112 from second line trimmer 276 and second guard body portion 210B may facilitate passing the trimmer line 112 behind the guard assembly 200 into contact with the first line trimmer 274.

Embodiments of the power tool and guard assembly depicted and described herein may advantageously and beneficially facilitate an operator repositioning or removing a guard for the power tool, such as to adjust a cutting position or to replace the component. Embodiments depicted and described herein may facilitate such functions and interactions repeatedly by the operator, such as to improve speed, accessibility, ease, and mitigate issues related to ergonomics or safety.

Further aspects and embodiments of the present disclosure are provided in the following clauses:
1. A guard assembly for a trimmer tool including a tool head, the guard assembly including a mount body forming a slot extending along a radial direction and including an attachment member; a guard body forming a perimeter configured to partially surround the tool head, the guard body forming a first opening configured to align with the slot at the mount body, the guard body forming a second opening from which a track extends along the radial direction, wherein the attachment member is extendable into the second opening and into the track, the attachment member of the mount body configured to slide within the track at the guard body; and a handle assembly extendable through the slot at the mount body and the first opening at the guard body to selectively affix the mount body to the guard body.
2. The guard assembly of any one or more clauses herein, including a base coupled to the guard body, the base including a stop wall positioned to limit movement of the attachment member of the mount body along the track at the guard body.
3. The guard assembly of any one or more clauses herein, wherein the stop wall is positioned along the radial direction between the second opening and the track.
4. The guard assembly of any one or more clauses herein, wherein the stop wall is positioned along the radial direction to limit movement of the attachment member of the mount body from the track into the second opening at the guard body.
5. The guard assembly of any one or more clauses herein, the handle assembly configured to compress the guard body and the mount body onto one another to affix the guard body and the mount body together.
6. The guard assembly of any one or more clauses herein, the handle assembly including a knob attached to a threaded body, wherein the threaded body is releasably couplable to the guard body at the first opening and extending through the slot at the mount body.
7. The guard assembly of any one or more clauses herein, wherein the first opening at the guard body is a threaded interface configured to receive the threaded body.
8. The guard assembly of any one or more clauses herein, wherein the attachment member includes a detent forming a hook configured to inhibit removing the attachment member through the track at the guard body.
9. The guard assembly of any one or more clauses herein, wherein the mount body is configured to connect the guard body to the tool head.
10. The guard assembly of any one or more clauses herein, wherein the mount body includes a channel configured to receive a shaft of the trimmer tool.
11. The guard assembly of any one or more clauses herein, wherein the guard body includes a first guard body portion releasably coupled to a second guard body portion.
12. A trimmer tool, including a shaft; a tool head; a linkage configured to connect the tool head to the shaft; and a guard assembly including a mount body forming a slot extending along a radial direction extending from the tool head, the mount body including an attachment member, the mount body including a channel configured to receive the shaft and the linkage; a guard body forming a perimeter configured to partially surround the tool head, the guard body forming a first opening configured to align with the slot at the mount body, the guard body forming a second opening from which a track extends along the radial direction, wherein the attachment member is extendable into the second opening and into the track, the attachment member of the mount body configured to slide within the track at the guard body; and a handle assembly extendable through the slot at the mount body and the first opening at the guard body to selectively affix the mount body to the guard body.
13. The trimmer tool of any one or more clauses herein, including a base coupled to the guard body, the base including a stop wall positioned to limit movement of the attachment member of the mount body along the track at the guard body.
14. The trimmer tool of any one or more clauses herein, wherein the stop wall is positioned along the radial direction between the second opening and the track.
15. The trimmer tool of any one or more clauses herein, wherein the stop wall is positioned along the radial direction to limit movement of the attachment member of the mount body from the track into the second opening at the guard body.
16. The trimmer tool of any one or more clauses herein, the handle assembly configured to compress the guard body and the mount body onto one another to affix the guard body and the mount body together.
17. The trimmer tool of any one or more clauses herein, the handle assembly including a knob attached to a threaded body, wherein the threaded body is releasably couplable to the guard body at the first opening and extending through the slot at the mount body.
18. The trimmer tool of any one or more clauses herein, wherein the first opening at the guard body is a threaded interface configured to receive the threaded body.
19. The trimmer tool of any one or more clauses herein, wherein the attachment member includes a detent forming a hook configured to inhibit removing the attachment member through the track at the guard body.
20. The trimmer tool of any one or more clauses herein, wherein the guard body includes a first guard body portion releasably coupled to a second guard body portion.
21. The trimmer tool of any one or more clauses herein, including a first line trimmer attached to the first guard body portion.
22. The trimmer tool of any one or more clauses herein, including a second line trimmer attached to the second guard body portion.
23. The trimmer tool of any one or more clauses herein, wherein the first line trimmer is attached to the first guard body portion at or proximate to an interface of the first guard body portion and the second guard body portion.
24. The trimmer tool of any one or more clauses herein, wherein the second line trimmer is attached to the second guard body portion distal to the first line trimmer.
25. The trimmer tool of any one or more clauses herein, wherein the second line trimmer is attached to the second guard body portion more radially outward from the tool head than the first line trimmer.
26. The trimmer tool of any one or more clauses herein, wherein the second line trimmer is attached to the second guard body more proximate along a direction of rotation of the cutting line to the guard assembly than the first line trimmer.
27. A guard assembly for a power tool in accordance with embodiments depicted and described herein.
28. A guard assembly for a trimmer tool in accordance with embodiments depicted and described herein.
29. A power tool including a guard assembly in accordance with embodiments depicted and described herein.
30. A trimmer tool including a guard assembly in accordance with embodiments depicted and described herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A guard assembly (200) for a trimmer tool (100) comprising a tool head (110), the guard assembly (200) comprising:
a mount body (220) forming a slot (222) extending along a radial direction and comprising an attachment member (226);
a guard body (210) forming a perimeter configured to partially surround the tool head (110), the guard body (210) forming a first opening (212) configured to align with the slot (222) at the mount body (220), the guard body (210) forming a second opening (214) from which a track (215) extends along the radial direction, wherein the attachment member (226) is extendable into the second opening (214) and into the track (215), the attachment member (226) of the mount body (220) configured to slide within the track (215) at the guard body (210); and
a handle assembly (240) extendable through the slot (222) at the mount body (220) and the first opening (212) at the guard body (210) to selectively affix the mount body (220) to the guard body (210).

2. The guard assembly (200) of claim 1, comprising:
a base (250) coupled to the guard body (210), the base (250) comprising a stop wall (252) positioned to limit movement of the attachment member (226) of the mount body (220) along the track (215) at the guard body (210).

3. The guard assembly (200) of claim 2, wherein the stop wall (252) is positioned along the radial direction between the second opening (214) and the track (215).

4. The guard assembly (200) of claim 2, wherein the stop wall (252) is positioned along the radial direction to limit movement of the attachment member (226) of the mount body (220) from the track (215) into the second opening (214) at the guard body (210).

5. The guard assembly (200) of claim 1, the handle assembly (240) configured to compress the guard body (210) and the mount body (220) onto one another to affix the guard body (210) and the mount body (220) together.

6. The guard assembly (200) of claim 1, the handle assembly (240) comprising a knob (242) attached to a threaded body (246), wherein the threaded body (246) is releasably couplable to the guard body (210) at the first opening (212) and extending through the slot (222) at the mount body (220).

7. The guard assembly (200) of claim 6, wherein the first opening (212) at the guard body (210) is a threaded interface configured to receive the threaded body (246).

8. The guard assembly (200) of claim 1, wherein the attachment member (226) comprises a detent (227) forming a hook configured to inhibit removing the attachment member (226) through the track (215) at the guard body (210).

9. The guard assembly (200) of claim 1, wherein the mount body (220) is configured to connect the guard body (210) to the tool head (110).

10. The guard assembly (200) of claim 1, wherein the mount body (220) comprises a channel (230) configured to receive a shaft (120) of the trimmer tool (100).

11. The guard assembly (200) of claim 1, wherein the guard body (210) comprises a first guard body portion (210A) releasably coupled to a second guard body portion (210B).

12. A trimmer tool (100), comprising:
a shaft (120);
a tool head (110);
a linkage (130) configured to connect the tool head (110) to the shaft (120); and
a guard assembly (200) comprising:
a mount body (220) forming a slot (222) extending along a radial direction extending from the tool head (110), the mount body (220) comprising an attachment member (226), the mount body (220) comprising a channel (230) configured to receive the shaft (120) and the linkage (130);
a guard body (210) forming a perimeter configured to partially surround the tool head (110), the guard body (210) forming a first opening (212) configured to align with the slot (222) at the mount body (220), the guard body (210) forming a second opening (214) from which a track (215) extends along the radial direction, wherein the attachment member (226) is extendable into the second opening (214) and into the track (215), the attachment member (226) of the mount body (220) configured to slide within the track (215) at the guard body (210); and
a handle assembly (240) extendable through the slot (222) at the mount body (220) and the first opening (212) at the guard body (210) to selectively affix the mount body (220) to the guard body (210).

13. The trimmer tool (100) of claim 12, comprising:
a base (250) coupled to the guard body (210), the base (250) comprising a stop wall (252) positioned to limit movement of the attachment member (226) of the mount body (220) along the track (215) at the guard body (210).

14. The trimmer tool (100) of claim 13, wherein the stop wall (252) is positioned along the radial direction between the second opening (214) and the track (215).

15. The trimmer tool (100) of claim 13, wherein the stop wall (252) is positioned along the radial direction to limit movement of the attachment member (226) of the mount body (220) from the track (215) into the second opening (214) at the guard body (210).
